# EUROPÄISCHE PATENTANMELDUNG

(11) **EP 2 042 382 A2**
(43) Veröffentlichungstag der Anmeldung: **01.04.2009**
(21) Anmeldenummer: 08165023.6
(22) Anmeldetag: 24.09.2008
(51) Int. Cl.: B60R 21/13

(54) **Überrollschutzsystem**

(30) Priorität: 25.09.2007 DE 102007047164
(71) Anmelder: ISE Automotive GmbH, 51702 Bergneustadt (DE)
(72) Erfinder: Latussek, Holger, 51702, Bergneustadt (DE)
(74) Vertreter: Fuchs

(57) **Zusammenfassung**

Vorgeschlagen wird ein Überrollschutzsystem für Fahrzeuge mit einem horizontalen Träger (1) der quer zur Längsachse des Fahrzeugs angeordnet und seitlich über Verbindungsknoten (2) mit der Kraftfahrzeugkarosserie verbunden ist und mit einem mittels einer Antriebseinrichtung (3) aus einer Ruhelage in eine Wirklage ausfahrbaren und im Träger (1) geführten Überrollkörper, der mittels einer Halterung auslösbar fixiert und in Wirklage mittels einer Verriegelungseinrichtung (6, 7) belastbar gesichert ist.

Zur Verbesserung der mechanischen Festigkeit des Trägers sowie zur Verbesserung des Kraftflusses beim ausgelösten Überrollschutzsystem ist vorgesehen, dass die Verriegelungseinrichtung aus einem außen am Überrollkörper (4) befestigten mit ausfahrenden ersten Element (6) und einem zweiten, mit dem Verbindungsknoten verbundenen Element (7) besteht. Die Elemente bestehen vorzugsweise aus einer Zahnstange (6) und einer schwenkbar gelagerten Sperrklinke (7), die alternativ als erstes bzw. zweites Element am Überrollkörper befestigt bzw. mit dem Verbindungsknoten verbunden sind.

Die erfindungsgemäße Ausbildung der Verriegelungseinrichtung hat den Vorteil, dass der Träger (1) nicht durch unnötige Durchbrechungen geschwächt wird und dass der Kraftfluss im Aktivierungsfall außen am Träger (1) vorbei über den Verbindungsknoten (2) direkt in die Fahrzeugkarosserie geleitet wird. Bei einem vorgegebenen Träger (1) wird auf diese Weise die mechanische Festigkeit verbessert; alternativ kann man den Träger (1) für geringere Beanspruchungen material- und gewichtssparend konstruieren.

## Beschreibung

Die Erfindung betrifft ein Überrollschutzsystem für ein Fahrzeug mit einem horizontalen Träger, der quer zur Längsachse des Fahrzeugs angeordnet und seitlich über Verbindungsknoten mit der Fahrzeugkarosserie verbunden ist und mit einem mittels einer Antriebseinrichtung aus einer Ruhelage in eine Wirklage ausfahrbaren und im Träger geführten Überrollkörper, der mittels einer Halterung auslösbar fixiert und in Wirklage mittels einer Verriegelungseinrichtung belastbar gesichert ist.

Derartige Überrollschutzsysteme werden bei oben offenen Fahrzeugen, aber auch bei Fahrzeugen mit abnehmbaren Dächern oder solchen Dächern verwendet, die bei einem Überschlag keinen ausreichenden Schutz für die Insassen bilden.

Ein derartiges Überrollschutzsystem ist beispielsweise aus der DE 10 2005 013 377 A1 bekannt geworden. Darin wird bemängelt, dass bei einem aus der DE 102 19 447 A1 bekannten Überrollschutzsystem der Querträger außer den unvermeidlichen Durchtrittsöffnungen für den Überrollkörper noch eine Durchtrittsöffnung für die Rasteinrichtung aufweist, die im ausgefahrenen Zustand des Überrollkörpers über den Querschnitt des Querträgers nach oben vorsteht. Dadurch sei der Querträger zusätzlich geschwächt und müsse zum Ausgleich anderweitig stärker dimensioniert werden. Eine größere Höhenerstreckung des Querträgers sei jedoch nach oben durch die Gürtellinie des Fahrzeugs und nach unten durch die Forderung einer Durchlademöglichkeit unterhalb des Querträgers begrenzt.

Daraus wird die Aufgabe abgeleitet, das bekannte Überrollschutzsystem weiter zu entwickeln. Zur Lösung wird vorgeschlagen, die Sperrklinke so tief anzuordnen, dass die Zahnleiste in der ausgefahrenen Wirkstellung des Überrollbügels innerhalb des Querschnitts des Querträgers verbleibt. Auf diese Weise wird erreicht, dass an der Oberseite des Querträgers eine Durchtrittsöffnung für die Zahnleiste nicht mehr erforderlich ist.

Bei einer Ausführungsform des Erfindungsgedankens gemäß DE 10 2005 013 377 A1 ist allerdings noch vorgesehen, im oberen Teil des Querträgers eine Öffnung für den Durchtritt des Entriegelungshebels vorzusehen. Diese Öffnung könne so klein ausgeführt werden, dass sie keine nennenswerte Schwächung des Profils des Querträgers verursacht. Gleichwohl steht diese Ausführungsform in einem gewissen Widerspruch zum Grundgedanken der beanspruchten Weiterentwicklung.

Der vorliegenden Erfindung liegt die Aufgabe zugrunde, das bekannte Überrollschutzsystem weiter zu verbessern und insbesondere eine Schwächung des Querträgers durch vermeidbare Öffnungen noch konsequenter zu vermeiden.

Zur Lösung dieser Aufgabe wird erfindungsgemäß vorgeschlagen, dass die Verriegelungseinrichtung aus einem außen am Überrollkörper befestigten, mit ausfahrendem ersten Element und einem zweiten, mit dem Verbindungsknoten verbundenen Element besteht.

Dadurch wird nicht nur vermieden, dass der Träger durch Öffnungen an der Oberseite geschwächt wird, sondern auch erreicht, dass der Kraftfluss bei einer Belastung des ausgefahrenen Überrollkörpers nicht mehr durch den Träger, sondern durch den Verbindungsknoten und somit direkter zur Fahrzeugkarosserie geleitet wird. Beide Aspekte führen dazu, dass der Träger festigkeitsmäßig entlastet wird und konstruktiv einfacher und leichter ausgelegt werden kann.

Das erste (oder zweite) Element der Verriegelungseinrichtung ist vorzugsweise eine Zahnstange und das zweite (oder erste) Element eine schwenkbar gelagerte Sperrklinke, wobei die in Klammern genannte Alternative eine kinematische Umkehrung der anderen Ausführungsform ist.

In beiden Fällen ist es möglich, den Entriegelungshebel seitlich außerhalb des Trägers, nach oben aus dem Verbindungsknoten vorstehend, anzuordnen. Der Träger kann vorzugsweise als Hohlkastenprofil ausgebildet werden, in dem die unvermeidbaren Durchtrittsöffnungen für den Überrollkörper vorgesehen sind und der seitlich in einer sich senkrecht zur Längsachse des Hohlkastenprofils erstreckenden Ebene endet. Weiter ist vorgesehen, dass der Verbindungsknoten mittels innen und/oder außen angeordneter Stege in das Hohlkastenprofil des Trägers einsteckbar ausgebildet ist. Durch die erfindungsgemäße Anordnung eines der Elemente der Verriegelungseinrichtung im Verbindungsknoten ist es möglich, dass die Wirkungsebene der Verriegelungseinrichtung innerhalb des Hohlkastenprofils und der Drehpunkt der Sperrklinke außerhalb des Hohlkastenprofils liegt. Es besteht aber auch die Möglichkeit, dass sowohl die Wirkungsebene als auch der Drehpunkt außerhalb des Hohlkastenprofils liegen.

Der Verbindungsknoten kann aus einem Abschnitt eines Strangpressprofils bestehen, dessen vertikale Erstreckung auf das Innenmaß des Hohlkastenprofils abgestimmt ist und der mittels in das Hohlkastenprofil eingreifender und/oder außen über das Hohlkastenprofil schiebbarer Stege in das Hohlkastenprofil formschlüssig einsteckbar ist.

Die Halterung des Überrollkörpers wird vorteilhafterweise U-förmig mit zwei sich nach unten erstreckenden Stegen und einer damit verbundenen Quertraverse ausgebildet. Dabei können die Stege und/oder die Quertraverse aus abgekanteten Blechabschnitten oder aus Abschnitten von Strangpressprofilen bestehen. Die Federn oder pyrotechnischen Treibsätze zur Aktivierung des Überrollkörpers können sich auf der Quertraverse abstützen, auf der auch eine Verriegelungseinrichtung zur Halterung des Überrollkörpers in der Ruhelage angeordnet werden kann.

Weitere Einzelheiten der Erfindung werden anhand des in den Figuren 1 bis 4 dargestellten Ausführungsbeispiels näher erläutert.
- Fig. 1: eine Seitenansicht des Überrollschutzsystems,
- Fig. 2: das Überrollschutzsystem gemäß Fig. 1, teilweise aufgeschnitten,
- Fig. 3: eine perspektivische Ansicht des Überrollschutzsystems gemäß Fig. 1,
- Fig. 4: eine perspektivische Ansicht des Überrollschutzsystems gemäß Fig. 3, teilweise aufgeschnitten.

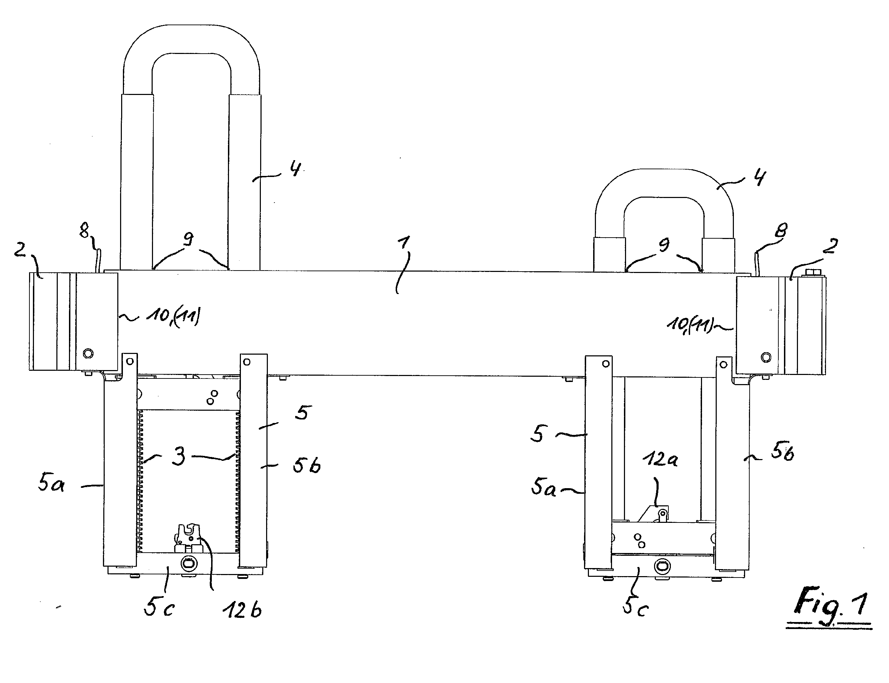

Da in den Figuren 1 bis 4 nur ein einziges Ausführungsbeispiel dargestellt ist, bezieht sich die folgende Beschreibung auf alle Figuren 1 bis 4. Soweit ein Detail nur in einer Figur zu sehen ist, wird dies vermerkt.

Das in Fig. 1 bis 4 dargestellte Überrollschutzsystem besteht aus einem Träger 1, seitlichen Verbindungsknoten 2, zwei Überrollbügeln 4 mit Federn 3, einer unterhalb des Trägers 1 angeordneten Vorrichtung 5 zur Halterung des Überrollbügels 4, einer Verriegelungseinrichtung mit Zahnstange 6 und Sperrklinke 7, einem Entriegelungshebel 8 und einer Verriegelungseinrichtung 12 a, b zur Halterung des Überrollbügels 4 in der Ruhelage.

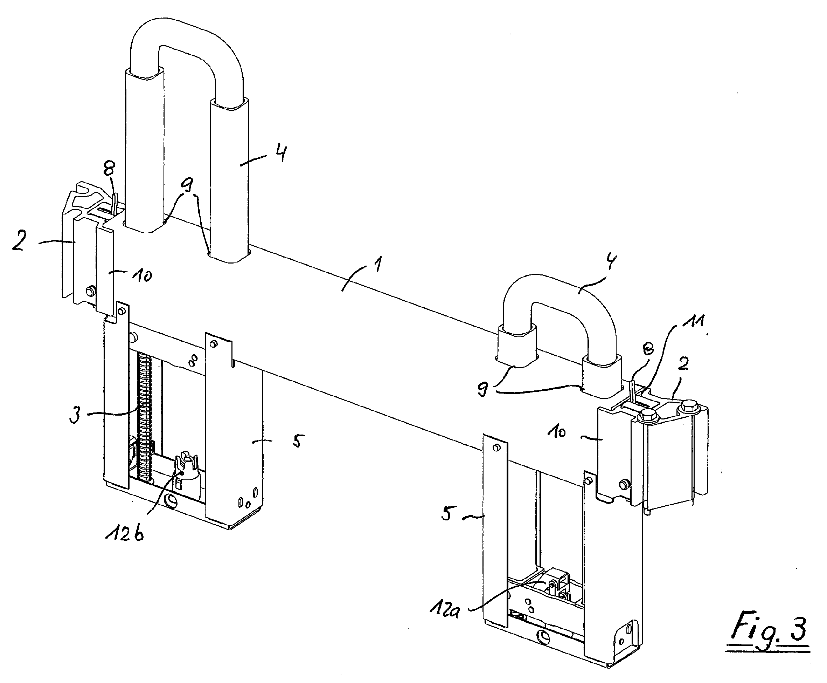

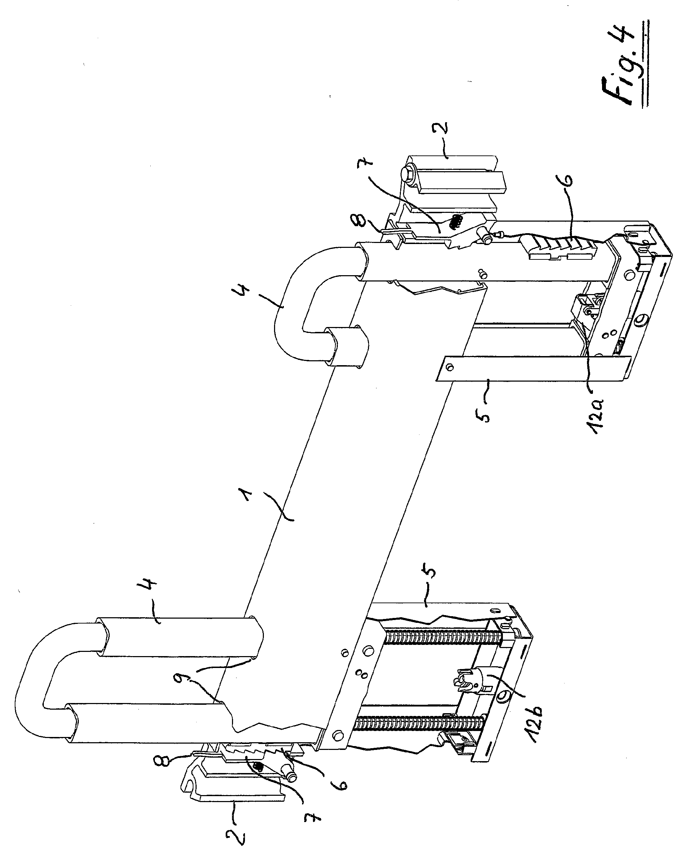

Der Träger 1 weist Durchtrittsöffnungen 9 für den Überrollbügel 4 auf, der links in ausgefahrenem Zustand und rechts in eingefahrenem Zustand dargestellt ist. Die Verbindungsknoten 2 sind mittels innerer und/oder äußerer Stege 10, 11 in den Träger endseitig einsteckbar ausgebildet. Die Durchtrittsöffnungen 9 und die Stege 10, 11 sind am besten in den perspektivischen Darstellungen der Figuren 3 und 4 zu erkennen.

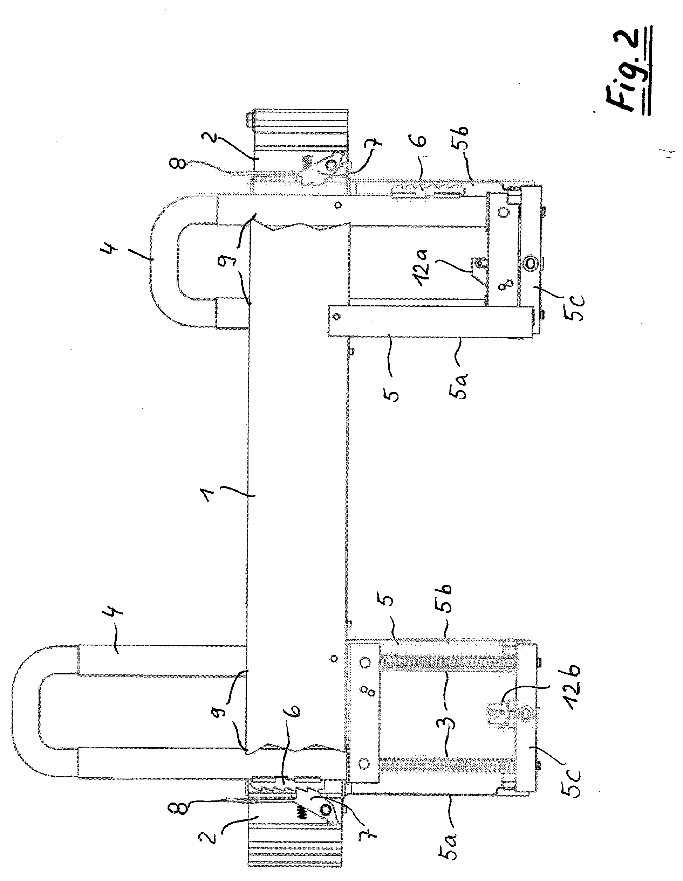

Aus den teilweise aufgeschnittenen Darstellungen der Figuren 2 und 4 ist die außenseitige Anordnung der Zahnstange 6 am Überrollbügel 4 und die schwenkbar, vorgespannte Lagerung der Sperrklinke 7 mit Entriegelungshebel 8 ersichtlich. Ferner wird daraus deutlich, dass die Wirkungsebene der Verriegelungseinrichtung 6, 7 innerhalb des Hohlkastenprofils und der Drehpunkt der Sperrklinke 7 außerhalb des Hohlkastenprofils im Verbindungsknoten 2 liegt.

Die Halterung 5 des Überrollbügels 4 umfasst zwei sich unterhalb des Trägers senkrecht nach unten erstreckende Stege 5 a und 5 b und eine Quertraverse 5 c, die endseitig mit den Stegen 5 a, b verbunden ist. Auf der Quertraverse 5 c ist außerdem das Teil 12 b der Verriegelungseinrichtung zur Halterung des Überrollbügels 4 in der Ruhelage angeordnet, das mit einem an der unteren Querverbindung des Überrollbügels 4 befestigten zweiten Teils 12 a der Verriegelungseinrichtung zusammenwirkt.

Aus den perspektivischen Darstellungen der Figuren 3 und 4 ist die Querschnittsgestaltung des Verbindungsknotens 2 ersichtlich, der vorzugsweise aus einem Abschnitt eines Strangpressprofils besteht. Dieser ist endseitig in den Träger 1 einsteckbar gestaltet und außenseitig mit einer Anlagefläche zur Befestigung an der Fahrzeugkarosserie.

## Patentansprüche

1. Überrollschutzsystem für ein Fahrzeug, mit einem horizontalen Träger (1), der quer zur Längsachse des Fahrzeuges angeordnet und seitlich über Verbindungsknoten (2) mit der Fahrzeugkarosserie verbunden ist und mit einem mittels einer Antriebseinrichtung (3) aus einer Ruhelage in eine Wirklage ausfahrbaren und im Träger (1) geführten Überrollkörper (4), der mittels einer Halterung (5) auslösbar fixiert und in Wirklage mittels einer Verriegelungseinrichtung (6, 7) belastbar gesichert ist, **dadurch gekennzeichnet, dass** die Verriegelungseinrichtung (6, 7) aus einem außen am Überrollkörper (4) befestigten, mit ausfahrendem ersten Element (6) und einem zweiten, mit dem Verbindungsknoten verbundenen Element (7) besteht.

2. Überrollschutzsystem nach Anspruch 1, **dadurch gekennzeichnet, dass** das erste (zweite) Element eine Zahnstange (6) und das zweite (erste) Element eine schwenkbar gelagerte Sperrklinke (7) ist (kinematische Umkehrung).

3. Überrollschutzsystem nach Anspruch 1 oder 2, **dadurch gekennzeichnet, dass** die Sperrklinke (7) einen Entriegelungshebel (8) aufweist, der seitlich außerhalb des Trägers (1) nach oben aus dem Verbindungsknoten (2) vorsteht.

4. Überrollschutzsystem nach einem der Ansprüche 1 bis 3, **dadurch gekennzeichnet, dass** der Träger (1) als Hohlkastenprofil ausgebildet ist, das Durchtrittsöffnungen (9) für den Überrollkörper (4) aufweist und seitlich in einer sich senkrecht zur Längsachse des Hohlkastenprofils erstreckenden Ebene endet.

5. Überrollschutzsystem nach Anspruch 4, **dadurch gekennzeichnet, dass** der Verbindungsknoten (2) mittels innen und/oder außen angeordneter Stege (10, 11) in das Hohlkastenprofil des Trägers (1) einsteckbar ausgebildet ist.

6. Überrollschutzsystem nach einem der Ansprüche 1 bis 5, **dadurch gekennzeichnet, dass** die Wirkungsebene der Verriegelungseinrichtung (6, 7) innerhalb des Hohlkastenprofils und der Drehpunkt der Sperrklinke außerhalb des Hohlkastenprofils liegt.

7. Überrollschutzsystem nach einem der Ansprüche 1 bis 6, **dadurch gekennzeichnet, dass** der Verbindungsknoten (2) aus einem Abschnitt eines Strangpressprofils besteht.

8. Überrollschutzsystem nach einem der Ansprüche 1 bis 7, **dadurch gekennzeichnet, dass** die Halterung (5) zur Halterung des Überrollkörpers (4) U-förmig mit zwei sich nach unten erstreckenden Stegen (5 a, b) und einer damit verbundenen Quertraverse (5 c) ausgebildet und unterhalb des Trägers (1) angeordnet ist.

9. Überrollschutzsystem nach Anspruch 8, **dadurch gekennzeichnet, dass** die Stege (5 a, b) und/oder die Quertraverse (5 c) aus abgekanteten Blechabschnitten oder aus Abschnitten von Strangpressprofilen bestehen.

10. Überrollschutzsystem nach einem der Ansprüche 1 bis 9, **dadurch gekennzeichnet, dass** zur Aktivierung des Überrollkörpers (4) Federn (3) oder pyrotechnische Treibsätze vorgesehen sind, die sich auf der Quertraverse (5 c) abstützen und dass auf der Quertraverse (5 c) eine Verriegelungseinrichtung (12 a, b) zur Fixierung des Überrollkörpers in der Ruhelage anordnet ist.
